# EUROPEAN PATENT APPLICATION

(11) **EP 4 552 471 A1**
(43) Date of publication of application: **14.05.2025**
(21) Application number: 23208889.8
(22) Date of filing: 09.11.2023
(51) Int. Cl.: A01D 89/00

(54) **GRASS PICKUP HEADER**

(71) Applicant: CNH Industrial Belgium N.V., 8210 Zedelgem (BE)
(72) Inventor: Vermander, Jeroen, 8210 Zedelgem (BE)
(74) Representative: CNH Industrial IP Department

(57) **Abstract**

A pickup assembly (2) for an agricultural harvester (1) comprises a pickup assembly frame (200), a pickup unit (10) carried by the pickup assembly frame (200) and configured to pick up crop from a field, and at least one skid shoe (300), mounted below at least a portion of the pickup unit (10).

## Description

### TECHNICAL FIELD

The present invention relates to a pickup assembly for an agricultural harvester, the pickup assembly comprising a pickup assembly frame, a pickup unit carried by the pickup assembly frame and configured to pick up crop from a field.

### BACKGROUND

Certain agricultural machines, such as forage harvesters, forage wagons and balers, collect crop material that has been cut from the field. The component of such agricultural machines which gathers the crop material and feeds it further into the machine for processing is generally known as a pickup assembly. A typical pickup assembly comprises a pickup unit in the form of a pickup drum rotatably mounted on the pickup assembly frame. The pickup drum, which is also known as a pickup reel, has radially arranged projecting tines to collect the crop material and propel it upwards, past a guiding element, and then into a feeding auger that moves the crop laterally towards a feed channel through which the crop material is conveyed into the machine for subsequent processing. Such subsequent processing may, for example, involve baling, threshing, chopping, storing and/or depositing. The guiding element is generally referred to as a wind guard, and serves the purposes of restricting the movement of the collected crop material in the forward and upward direction, shielding the crop flow path from wind influence and guiding the crop material efficiently into the feed channel.

The pickup assembly frame is carried by the agricultural machine and usually supported above the ground by a plurality of support wheels. Typically, two front and two rear wheels are mounted to the pickup assembly frame. The support wheels may be height adjustable and comprise a suspension system to ensure that the pickup unit moves over the field at a constant and predetermined height above the ground. However, even with proper suspension, the uneven field surface may still cause the pickup unit to occasionally hit the ground, thereby possibly damaging the pickup reel and the pickup tines.

It is an aim of the present invention to protect the pickup assembly against such damage.

### SUMMARY OF THE INVENTION

According to an aspect of the invention there is provided a pickup assembly for an agricultural harvester, the pickup assembly comprising a pickup assembly frame, a pickup unit carried by the pickup assembly frame and configured to pick up crop from a field, and at least one skid shoe, mounted below at least a portion of the pickup unit.

In many embodiments, the pickup assembly further comprises at least one support wheel, mounted to the pickup assembly frame for supporting the pickup assembly frame above the ground. Some or all of the support wheels may be height adjustable. When the agricultural harvester is a forage harvester, the pickup assembly is mounted to a feeder of the harvester when in use. Hydraulic cylinders mounted between a chassis and a feeder of the forage harvester are used to control a height of the pickup assembly relative to the ground. In such a forage harvester, the pickup assembly support wheels may be dispensed with.

While driving over the field, the agricultural harvester pushes and/or carries the pickup assembly forward. As long as the field is sufficiently even, the pickup assembly frame moves over the field in a substantially horizontal orientation and with the pickup unit at a substantially constant height above the field surface. In this situation, the skid shoe may either hover at a small distance above the surface or it may slide over the field. When driving on a more uneven field and running into bumps or pits, the distance between the pickup unit and the field surface may vary. For example, when one or more support wheels run into a small ditch, the respective ends of the pickup assembly frame will come down together with the support wheel, causing the pickup assembly frame to tilt. Without the skid shoes according to the invention, there may be a risk of parts of the pickup unit, for example the tines on the pickup drum, hitting the ground and being damaged. With the skid shoes according to the invention, the bottom surface of the skid shoe will hit the ground first, thereby preventing the pickup assembly frame to come down any further and preventing damage to the pickup unit or other parts of the pickup assembly.

In preferred embodiments, the skid shoe is pivotably mounted below at least a portion of the pickup unit. This may, e.g., allow the skid shoe to keep in contact with the ground surface while the height of the pickup assembly frame above the ground varies. The skid shoe may comprises a biasing member, configured to bias the skid shoe towards the field. The biasing member may, e.g., be embodied as a spring or a hydraulic suspension.

A hydraulic or electric actuator, or some other type of adjustment mechanism may be provided for actively adjusting a pivot angle of the skid shoe. Such active adjustment of the pivot angle may serve to ensure continuous contact between the skid shoe and the ground. In the event that the pickup assembly is at least partially supported by the skid shoes, for example when not having any support wheels, adjustment of the pivot angle may also be used for adjusting the height of the pickup unit above the ground.

In some embodiments, the pickup assembly may further comprise a skid shoe lock, operable to temporarily lock the skid shoe at a predetermined pivot angle. This skid shoe lock may advantageously be used when the pickup assembly is unmounted from the harvester and temporarily parked in a field or at a storage location. When parking the pickup assembly, the skid shoe may, for example, be locked into a configuration wherein it supports the pickup assembly, protects the tines of the pickup reel, and prevents the support wheels from rolling the pickup assembly away from its parking position.

The pickup assembly may comprise at least two skid shoes, mounted at two respective lateral ends of the pickup unit. A possible advantage of mounting the skid shoes in these locations is that they are kept away from, and do not interfere with, the rotating tines of a pickup reel. Thus, a mounting point or pivoting point of the skid shoes may be located at a height above the lowest point in the tine trajectory. In some embodiments, the pickup assembly may have a plurality of skid shoes that are distributed along a longitudinal axis of the pickup unit. Providing skid shoes at multiple locations along the pickup unit may protect the pickup unit not just against damage caused by the support wheels unexpectedly running into a recess, but also against stones and other obstacles lying on the field.

If the pickup unit comprises a rotatable reel with pickup tines, the skid shoes may comprise one or more slits provided to allow one or more of the pickup tines to move through the slits during rotation of the pickup reel. While the slits are allowed to rotate through the upper part of the skid shoes, the lower part of the skid shoes keeps the pickup unit away from the ground and protects the tines from being damaged by hitting the ground.

### BRIEF DESCRIPTION OF THE DRAWINGS

Embodiments of the invention will now be described by way of example with reference to the accompanying drawings, in which:
Figure 1 schematically shows a forage harvester with a pickup assembly according to an embodiment of the invention.
Figure 2 schematically shows a cross section of a pickup assembly for use with the forage harvester of Figure 1.
Figures 3 and 4 schematically show plan views of exemplary skid shoes for use in the pickup assembly of Figures 1 and 2.

### DETAILED DESCRIPTION

In the following, a pickup assembly is described in which the above described invention may be advantageously used.

The directions up, down, forward, and rearward are herein defined relative to the general horizontal orientation and driving direction of an agricultural harvester and its attached pickup assembly when moving over a field and picking up crop.

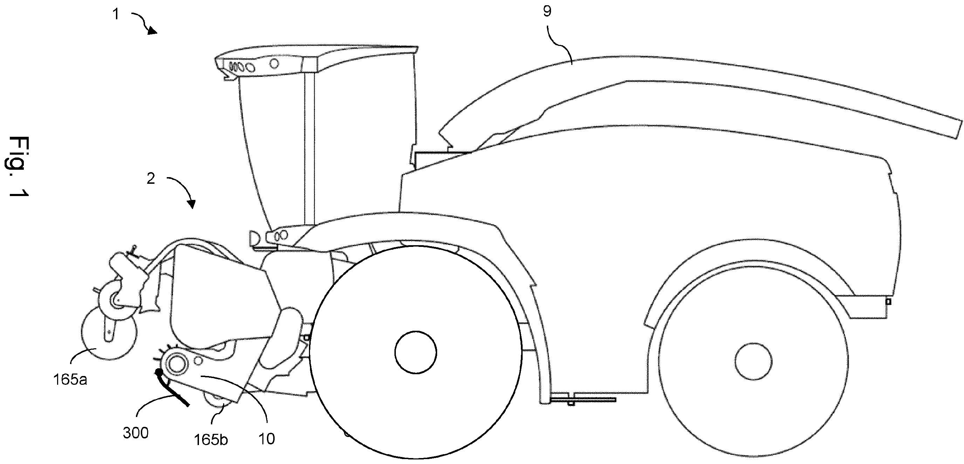

Figure 1 shows a schematic side view of an exemplary embodiment of an agricultural vehicle, illustrated in the form of a forage harvester 1. As the harvester 1 advances through a field, crops, e.g. grass or alfalfa, are gathered by a pickup assembly 2 and transported to a central crop inlet of the forage harvester 1 where they enter the harvester 1 through a set of feed rolls. The feed rolls guide the crops in the form of a mat with a given thickness towards a cutting drum, which rotates at high speed, about a rotation axis that is transversal to the direction of movement of the incoming crops. Knives are mounted on and distributed along the full circumference of the drum and pass by a stationary shear bar as the drum rotates, thereby chopping the crops into small pieces which are further transported between the cutting drum and a concave. The chopped material is then ejected by a blower through a spout 9. Because the current invention concerns an improvement to the pickup assembly 2, the internal crop processing parts of the forage harvester 1 are not shown in the drawings.

It should be appreciated that while the agricultural vehicle is illustrated and described as a forage harvester 1, in other embodiments the pickup assembly may be used in combination with other agricultural vehicles such as a forage wagon or baler. If used with a baler, this may, e.g., be a large square baler, a small square baler, or a round baler.

The pickup assembly 2 in Figure 1 is particularly suited for picking up a swath of grass or straw that has been arranged on the field by, for example, a combine harvester or mower. The pickup assembly 2 is mounted to a feeder of the forage harvester 1 when in use. Hydraulic cylinders mounted between a chassis and the feeder are used to control a height of the pickup assembly 2 relative to the ground. The pickup assembly 2 shown here comprise two front support wheels 165a and two rear support wheels 165b for supporting the pickup assembly 2 frame above the ground. Some or all of the support wheels 165a, 165b may include a suspension and/or may be height adjustable. In other embodiments, for example when the agricultural harvester is a baler, the pickup assembly may be an integrated part of the harvester itself.

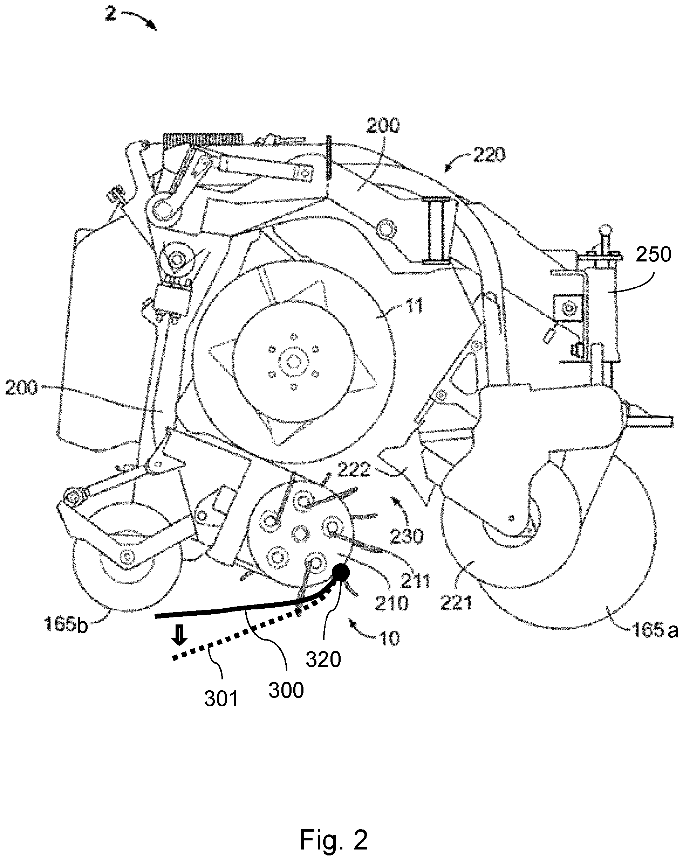

Already shown in Figure 1, but shown in more detail in Figure 2, are a pickup unit 10 that is carried by the pickup assembly frame and configured to pick the crop up from the field and a skid shoe 300, mounted below the pickup unit 10.

Figure 2 schematically shows a cross section of a pickup assembly 2 for use with the forage harvester 1 of Figure 1. The pickup assembly 2 comprises a pickup unit 10 that includes a pickup drum 210 that carries a plurality of tines 211. The pickup drum 210 is configured to rotate about a pickup axis that is transverse to the direction of movement of the harvester 1. The rotating tines 211 pick the crop material up from the ground and move it toward a crop material conveyor in the form of a feeding auger 11. The feeding auger 11 conveys the picked up crop material toward an inlet of the harvester 1, or to a central location where a separate conveyor conveys the crop material toward the interior of the harvester 1.

The pickup assembly also includes a wind guard assembly 220. The wind guard assembly 220 may include a cylindrical roller 221, which defines a roller axis about which the roller 221 rotates during operation. Like the pickup axis, the roller axis is generally transverse to the direction of movement of the harvester 1. It should be appreciated that while the roller 221 is illustrated and described as a cylindrical roller 221, the roller 221 can be formed to have other shapes. The roller 221 may be a fixed roller, i.e., a roller that generally maintains a fixed position of the roller axis during operation, or an adjustable roller, i.e., a roller that can be appreciably re-positioned so the roller axis moves to accommodate for variations swath height.

Other wind guard assemblies may, for example, have two rollers to guide crop material towards the crop material conveyor. In such wind guard assemblies, a front roller rolls on top of the swath of crop material as it is being collected while a rear roller is positioned above the tines 211 to guide the crop material toward the crop material conveyor 11 when it is picked up.

The pickup drum 210, feeding auger 11, and wind guard assembly 220 are all carried by a frame 200 of the pickup assembly 2, as may other functional parts of the pickup assembly 2. Typically, the pickup assembly 2 is provided as a separate header that can be mounted to the front of the harvester 1 when needed. Alternatively, the pickup assembly 2 is fixedly attached to a chassis of the forage harvester 1.

While driving over the field, the agricultural harvester 1 pushes and/or carries the pickup assembly 2 forward. As long as the field is sufficiently even, the pickup assembly frame 200 moves over the field in a substantially horizontal orientation and with the pickup unit 10 and pickup drum 210 at a substantially constant height above the field surface. In this situation, the skid shoe 300 may either hover at a small distance above the surface or it may slide over the field. When driving on a more uneven field and running into bumps or pits, the distance between the pickup unit 10 and the field surface may vary. For example, when one or more support wheels 165a, 165b run into a small ditch, the respective ends of the pickup assembly frame 200 will come down together with the support wheel 165a, 165b, causing the pickup assembly frame 200 to tilt. Without the skid shoes 300 according to the invention, there may be a risk of parts of the pickup unit 10, for example the tines 211 on the pickup drum 210, hitting the ground and being damaged. With the skid shoes 300 according to the invention, the bottom surface of the skid shoe 300 will hit the ground first, thereby preventing the pickup assembly frame 200 to come down any further and preventing damage to the pickup unit 10 or other parts of the pickup assembly 2. For this purpose, the skid shoe 300 is mounted below at least a portion of the pickup unit 10. For optimal protection of the pickup reel 210 and the pickup tines, the skid shoe 300 is preferably mounted below at least a portion of the pickup drum 210 and pickup tines 211, or at least directly below the rotational axis of the pickup drum 210.

In preferred embodiments, the skid shoe 300 is pivotably mounted below at least a portion of the pickup unit 10. This may, e.g., allow the skid shoe 300 to keep in contact with the ground surface while the height of the pickup assembly frame 200 above the ground varies. In this example, the skid show 300 is connected to the pickup unit 10 via a hinge 320. A dotted line 301 in Figure 2 indicates a second, and lower, configuration of the skid shoe 300 at a larger pivot angle.

The skid shoe 300 may comprises a biasing member, configured to bias the skid shoe 300 towards the field. The biasing member may, e.g., be embodied as a spring or a hydraulic suspension. A hydraulic or electric actuator (not shown) mounted between the pickup unit 10 and the skid shoe 300, or some other type of adjustment mechanism may be provided for actively adjusting a pivot angle of the skid shoe 300. Such active adjustment of the pivot angle may serve to ensure continuous contact between the skid shoe 300 and the ground.

The front support wheels 165a of the pickup assembly 2 shown in Figure 2 are height adjustable through a manually operated heigh adjustment mechanism 250. Alternatively, the height adjustment mechanism 250 may be remotely controlled via, for example, a hydraulic or electric actuator. In embodiments wherein the pickup assembly 2 is supported by the skid shoes 300 and does not have any support wheels 165a, 165b, adjustment of the skid shoe pivot angle may also be used for adjusting the height of the pickup unit 10 above the ground.

In some embodiments, the pickup assembly 2 may further comprise a skid shoe lock, operable to temporarily lock the skid shoe 300 at a predetermined pivot angle. If the skid shoe 300 is pivotable by means of an actuator, the skid shoe lock may be implemented as an electronic and/or hydraulic blocking mechanism for inhibiting movement of the actuator. Alternatively, a mechanical lock, for example using a latch, may be used for temporarily blocking the pivoting of the skid shoe 300. This skid shoe lock may advantageously be used when the pickup assembly 2 is unmounted from the harvester 1 and temporarily parked in a field or at a storage location. When parking the pickup assembly 2, the skid shoe 300 may, for example, be locked into a configuration wherein it supports the pickup assembly 2, protects the tines 211 of the pickup reel 210, and prevents the support wheels 165a, 165b from rolling the pickup assembly 2 away from its parking position.

The pickup assembly 2 may comprise at least two skid shoes 300, mounted at two respective lateral ends of the pickup unit 10. A possible advantage of mounting the skid shoes 300 in these locations is that they are kept away from, and do not interfere with, the rotating tines 211 of a pickup reel 210. Thus, a mounting point or pivoting point of the skid shoes 300 may be located at a height above the lowest point in the tine trajectory. In some embodiments, the pickup assembly 2 may have a plurality of skid shoes 300 that are distributed along a longitudinal axis of the pickup unit 10. Providing skid shoes 300 at multiple locations along the pickup unit 10 may protect the pickup unit 10 not just against damage caused by the support wheels 165a, 165b unexpectedly running into a recess, but also against stones and other obstacles lying on the field.

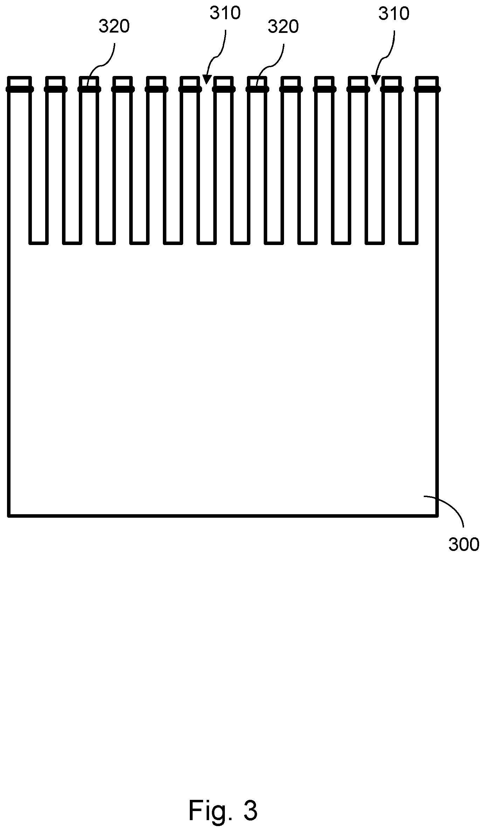

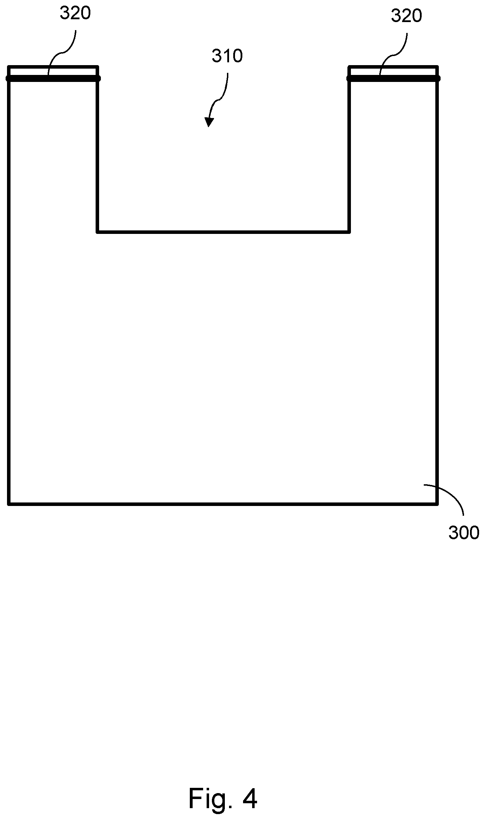

Figures 3 and 4 schematically show plan views of exemplary skid shoes 300 for use in the pickup assembly 2 of Figures 1 and 2. The skid shoes 300 are preferably made of a hard, strong, and durable material like steel or durable plastics. As shown in these

Figures, the skid shoes 300 may comprise one or more slits 310 provided to allow one or more of the pickup tines 311 to move through the slits during rotation of the pickup reel 210. While the slits 310 are allowed to rotate through the upper part of the skid shoes, the lower part of the skid shoes 300 keeps the pickup unit 10 away from the ground and protects the tines 211 from being damaged by hitting the ground. The skid shoes 300 may be mounted to a frame of the pickup unit 320 via hinges 320 located at the upper end of the skid shoe 300. The preferred arrangement of slits 310 and hinges 320 depends on the design and structure of the pickup unit 10 and the location of the pickup tines 211.

## Claims

1. A pickup assembly (2) for an agricultural harvester (1), the pickup assembly (2) comprising:
- a pickup assembly frame (200),
- a pickup unit (10) carried by the pickup assembly frame (200) and configured to pick up crop from a field, and
- at least one skid shoe (300), mounted below at least a portion of the pickup unit (10).

2. A pickup assembly (2) as claimed in claim 1, wherein the skid shoe (300) is pivotably mounted below at least a portion of the pickup unit (10).

3. A pickup assembly (2) as claimed in claim 2, wherein the skid shoe (300) comprises a biasing member, configured to bias the skid shoe (300) towards the field.

4. A pickup assembly (2) as claimed in claim 2 or 3, further comprising an adjustment mechanism for adjusting a pivot angle of the skid shoe (300).

5. A pickup assembly (2) as claimed in claim 4, wherein the adjustment mechanism comprises a hydraulic or electric actuator.

6. A pickup assembly (2) as claimed in any of claims 2 to 5, further comprising a skid shoe lock, operable to temporarily lock the skid shoe (300) at a predetermined pivot angle.

7. A pickup assembly (2) as claimed in any preceding claim, comprising at least two skid shoes (300), mounted below at least a portion of the pickup unit (10) and at two respective lateral ends of the pickup unit (10).

8. A pickup assembly (2) as claimed in any preceding claim, comprising a plurality of skid shoes (300), mounted below at least a portion of the pickup unit (10) and distributed along a longitudinal axis of the pickup unit (10).

9. A pickup assembly (2) as claimed in any preceding claim, wherein the pickup unit (10) comprises a rotatable reel (210) with pickup tines (211), and wherein the skid shoe (300) comprises one or more slits (310) provided to allow one or more of the pickup tines (211) to move through the slits (310) during rotation of the reel (210).

10. A pickup assembly (2) as claimed in any preceding claim, further comprising at least one support wheel (165a, 165b), mounted to the pickup assembly frame (200) for supporting the pickup assembly frame (200) above the ground.

11. A method for parking a pickup assembly (2) as claimed in claim 6, the method including the steps of:
- pivot the at least one skid shoe (300) to the predetermined pivot angle, and
- activate the skid shoe lock to temporarily lock the skid shoe (300) at the predetermined pivot angle.
